# EUROPEAN PATENT SPECIFICATION

(11) **EP 4 062 307 B1**
(45) Date of publication and mention of the grant of the patent: **09.04.2025**
(21) Application number: 19953064.3
(22) Date of filing: 18.11.2019
(51) Int. Cl.: G06F 21/56, G06F 11/34, G06F 21/55

(54) **ANOMALY DETECTION FROM LOG MESSAGES**
ANOMALIEDETEKTION AUS PROTOKOLLNACHRICHTEN
DÉTECTION D'ANOMALIE À PARTIR DE MESSAGES DE JOURNAL

(43) Date of publication of application: 28.09.2022
(73) Proprietor: Telefonaktiebolaget LM Ericsson (publ), 164 83 Stockholm (SE)
(72) Inventor: DATAR, Seema Madhav, Bangalore 560037 (IN)
(74) Representative: Ericsson
(86) International application number: PCT/IN2019/050852
(87) International publication number: WO 2021/100052

(56) References cited:
- WO-A1-2015/108534
- US-A1- 2017 357 710
- US-A1- 2018 349 250
- US-B2- 9 928 155

## Description

### Technical Field

Examples of the present disclosure relate to anomaly detection from log messages, for example making use of a plurality of Bloom filters.

### Background

Detection of anomalous behaviour is software systems may be advantageous in highly available software systems such as Network Functions Virtualization Infrastructure (NFVi). An anomaly detection system (ADS) is an example of a software system which observes the run time behaviour of another software system, such as for example error and/or warning log messages generated by the other software system, and may detect anomalous behaviour other the other software system.

In an anomaly detection system, it may be desirable that the system is intelligent enough to be able to detect anomalous behaviour of another software system without being mandated to be aware of the business logic of the application whose anomaly it intends to detect. Also, preferably the probability of false positives (incorrectly identifying normal behaviour as anomalous) should be minimized, and the probability of false negatives (instances of anomalous behaviour going undetected) should be near zero. As an example of a false positive, a software system might involve file writes on permanent storage (e.g. hard disk), and an error message conveying storage full conditions resulting from an attempted disk write may be construed as an anomaly and may be treated as such by the anomaly detection system. However, in reality, the application under observation may include functionality to mitigate this issue, and may therefore be able to correct itself from such transient problems. A run time ADS should also preferably be lightweight in terms of computing, memory and other resources.

An example ADS may use two stages as follows. In a first stage, the ADS may observe a software system operating in a "well behaved" manner (i.e. with no anomalies). Examples may include execution in a laboratory or test environment, pre-deployment trial executions at a customer premises. The ADS may "record" the normal (non-anomalous) behaviour of the software system. This may involve developing efficient databases and search data structures. This stage may demand heavy computing and memory resources, and can be performed offline (e.g. not in real-time).

In a second stage, run time behaviour (e.g. a customer deployment) of the software system may be observed by the ADS and compared against the recorded behaviour to potentially detect anomalies.

In a particular example of an ADS, in the first stage, a database of log messages collected during normal, non-anomalous execution of a software system is built. Log messages generated during second stage are searched for in the database to determine whether there is a match. Any variable portions such as timestamps in the log messages may be ignored. Any log messages that do not have a match in the database are treated as anomalous, and thus anomalous behaviour may be detected. Although efficient databases or search data structures can be built to perform the searches quickly, these methods may demand heavy resources such as processing or memory resources.

In another example, source code of a software system may be parsed to create a database or list of all potential error and warning log messages, for example from software statements that generate such log messages. At run time, in the second stage, log messages may be matched against the list of log messages created during parsing, and any non-matching log message may be treated as anomalous. Variable values in the log messages may be ignored. Such an ADS may be susceptible to generating false positives, and hence may indicate excessive invalid anomalies. Additionally, source code may not be available software systems.

WO2015108534 describes a bloom filter based log data analysis which may include pre-computing hash values related to log data information from log data to generate a data range based bloom filter corresponding to a data range of the log data.

US2017357710 describes a probabilistic data structure that may be queried to test whether text of a received log message is present in the probabilistic data structure.

US2018349250 describes methods for implementing content-level anomaly detection for devices having limited memory.

US9928155 describes methods for handling log data from one or more applications, sensors or instruments.

### Summary

One aspect of the present disclosure provides a method of determining whether at least a portion of a log message matches a predefined log message. The method comprises determining whether at least a portion of a log message generated by a computing system matches one or more of a plurality of Bloom filters, wherein each Bloom filter is associated with one or more respective predefined log messages and one or more respective database keys, and each database key is associated with one of the predefined log messages in a database. The method also comprises, if the at least the portion of the log message matches the one or more Bloom filters, for each of the one or more Bloom filters, determining whether the at least a portion of the log message matches any of the one or more associated predefined log messages by performing a lookup of the database using the associated one or more database keys.

Another aspect of the present disclosure provides apparatus for determining whether at least a portion of a log message matches a predefined log message. The apparatus comprises a processor and a memory. The memory contains instructions executable by the processor such that the apparatus is operable to determine whether at least a portion of a log message generated by a computing system matches one or more of a plurality of Bloom filters, wherein each Bloom filter is associated with one or more respective predefined log messages and one or more respective database keys, and each database key is associated with one of the predefined log messages in a database, and if the at least the portion of the log message matches the one or more Bloom filters, for each of the one or more Bloom filters, determine whether the at least a portion of the log message matches any of the one or more associated predefined log messages by performing a lookup of the database using the associated one or more database keys.

A further aspect of the present disclosure provides apparatus for determining whether at least a portion of a log message matches a predefined log message. The apparatus is configured to determine whether at least a portion of a log message generated by a computing system matches one or more of a plurality of Bloom filters, wherein each Bloom filter is associated with one or more respective predefined log messages and one or more respective database keys, and each database key is associated with one of the predefined log messages in a database, and if the at least the portion of the log message matches the one or more Bloom filters, for each of the one or more Bloom filters, determine whether the at least a portion of the log message matches any of the one or more associated predefined log messages by performing a lookup of the database using the associated one or more database keys.

### Brief Description of the Drawings

For a better understanding of examples of the present disclosure, and to show more clearly how the examples may be carried into effect, reference will now be made, by way of example only, to the following drawings in which:
Figure 1 is a flow chart of an example of method of anomaly detection from log messages;
Figure 2 shows an example of a data structure that may be created based on four example log messages; and
Figure 3 is a schematic of an example of anomaly detection from log messages.

### Detailed Description

The following sets forth specific details, such as particular embodiments or examples for purposes of explanation and not limitation. It will be appreciated by one skilled in the art that other examples may be employed apart from these specific details. In some instances, detailed descriptions of well-known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers. Nodes that communicate using the air interface also have suitable radio communications circuitry. Moreover, where appropriate the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analogue) circuitry including but not limited to application specific integrated circuit(s) (ASIC) and/or field programmable gate array(s) (FPGA(s)), and (where appropriate) state machines capable of performing such functions.

Certain embodiments of this disclosure may comprise methods or software such as anomaly detection systems (ADSs). In example methods or systems, log messages (error logs, warning logs, syslogs etc.) of a software system being observed may be recorded to record non-anomalous behaviour. This may occur for example in a first stage of operation of the method or system. In some examples, the database of recorded log messages may be compressed and/or may be partitioned based on patterns. In a second stage, some examples, log messages generated by the software system (also referred to herein as a computing system or application) may be searched in a database (e.g. of "normal" log messages collected in the first stage) to determine if there is a match. If there is no match, the log message may be treated as anomalous. Variable information in the log messages may be ignored, and in some examples may be removed before inclusion in the database and/or removed before the search. In some examples, the searching may be performed using multiple Bloom Filters.

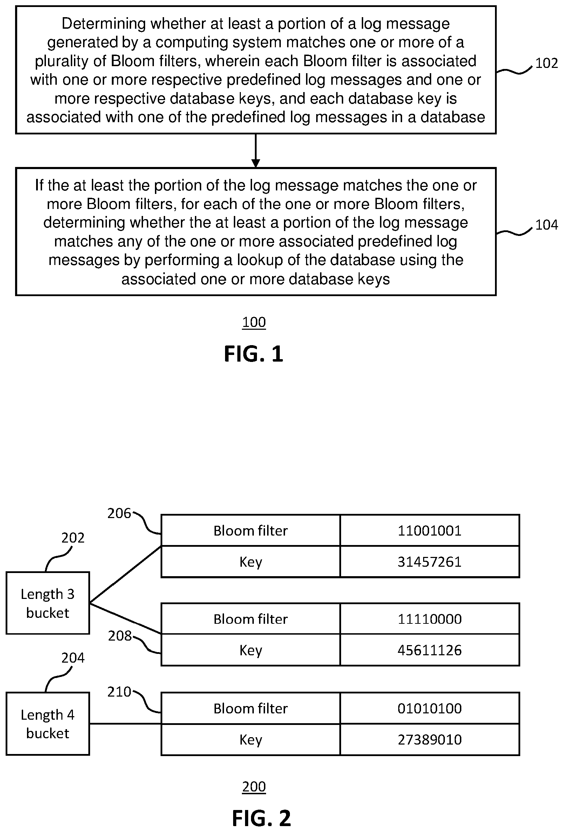

Figure 1 is a flow chart of an example of method of anomaly detection from log messages. For example, the method 100 may be performed by an anomaly detection system (ADS). In some examples, anomaly detection includes determining whether at least a portion of a log message matches a predefined log message. If it is determined that the at least a portion of the log messages matches a predefined log message, the log message may be treated as being "normal" or non-anomalous, and thus may relate to normal, non-anomalous behavior of a computing system. If, on the other hand, it is determined that the at least a portion of the log messages does not match a predefined log message, the log message may be associated with anomalous behavior of the computing system, and appropriate action may then be taken. In some examples, predefined log messages may be determined by observing the computing system operating normally or in a non-anomalous fashion, for example in a first stage of operation of an ADS. In some examples, the method 100 may be performed in real time.

The method comprises, in step 102, determining whether at least a portion of a log message generated by a computing system (e.g. a Network Function, NF, or Virtualized Network Function, VNF) matches one or more of a plurality of Bloom filters, wherein each Bloom filter is associated with one or more respective predefined log messages and one or more respective database keys, and each database key is associated with one of the predefined log messages in a database.

A Bloom filter is for example a data structure used for determining set membership of an element. It allows potentially a small percentage of false positives in exchange for space and/or speed. In a specific example, for a given set S, a Bloom filter uses a bit array of size m, and k hash functions to be applied to objects of the same type as the elements in S. Each hash application produces an integer value between 1 and m, used as an index into the bit array. In a filter setup phase, the k hash functions are applied to each element in S, and the bit indexed by each resulting value is set to 1 in the array. Thus, for each element in S, there will be a maximum of k bits set in the bit array, and fewer than k if two hash functions yield the same value for an element, and/or if some bits had already been set for other elements. When testing membership, i.e. testing whether a test element is part of the set S, the k hash functions are also applied to the test element, and the bits indexed by the resulting values are checked. If they are all 1, the element is potentially a member of the set S. Otherwise, if at least one bit is 0, the element is not part of the set, and it follows that false negatives are not possible. The number of hash functions used and the size of the bit array, as well as the number of elements in the set S, determine the false positive rate of the Bloom filter. For a set with n elements, the asymptotic false positive probability of a test is (1-e-km/n)k. The above is a specific example of a Bloom filter - in other examples of a Bloom filter as disclosed herein, the array represents one or more elements of a set and any suitable method may be used to define bits in the array that represent the set.

In some examples, using Bloom Filters may avoid using exhaustive searches of large databases of log messages. In examples as disclosed herein, the probability of a log message matching a predefined log message is very high (e.g. > 99%), assuming that the computing system being monitored operates normally for a majority of time. However, false negatives (anomalous behavior being undetected) are undesirable, whereas the Bloom filter can only indicate whether an element might be in a set, but not whether an element is definitely in a set. Hence, in some examples, once a match with a Bloom filter is made, it may be advantageous to perform a backend search of a database of predefined log messages. Multiple Bloom filters may be used to narrow down the database search.

In some examples, the predefined log messages may comprise log messages, or portions thereof, collected during observation of the computing system (or another computing system, which may be a similar computing system) that is operating in a normal, non-anomalous manner. This may be referred to as a learn stage.

Step 104 of the method 100 comprises, if the at least the portion of the log message matches the one or more Bloom filters, for each of the one or more Bloom filters, determining whether the at least a portion of the log message matches any of the one or more associated predefined log messages by performing a lookup of the database using the associated one or more database keys. The database key may be for example a data item that can be used to determine whether there is a positive match of the log message with one of the one or more associated predefined log messages (that are associated with the matching Bloom filter) without performing an exhaustive search of the database of predefined log messages. The data item can be, for example, an index, or may be an indication of a particular database if log messages associated with different Bloom filters are stored in different databases. Thus, the lookup of the database may comprise accessing the log message(s) stored in the database at a particular location, or may be performing an exhaustive search of a subset of the entire list of predefined messages (e.g. only performing a search in a portion of the database, or in a particular database where multiple databases are used).

Each Bloom filter may be associated with any number of predefined log messages, though in some examples, each Bloom filter is associated with only one respective predefined log message and only one respective database key associated with the predefined log message in the database. Thus, if the log message matches a Bloom filter, this may indicate that the log message possibly matches the associated predefined log message, and a lookup of the database for that predefined log message may confirm that the log message matches the predefined log message (or that the Bloom filter match was a false positive).

In some examples, the at least a portion of the log message comprises the log message with variable portions removed. Variable portions may comprise, for example, timestamps, IP addresses and/or any other information that may vary between log messages or between computing systems. In some examples, white spaces, numeric values and/or alphanumeric values may be considered as variable portions. The predefined messages may also in some examples comprise log messages gathered during normal operation of the computing system (or a similar computing system) with variable portions removed.

In some examples, the one or more Bloom filters are associated with log messages with a first number of words, and determining whether the at least a portion of a log message matches the one or more Bloom filters comprises determining that the at least a portion of the log message has the first number of words. For example, each Bloom filter may be associated with predefined log message(s) with a respective number of words. To determine if a log message (or portion thereof) matches a predefined log message, only those Bloom filters with the same number of words as the log message (or portion) may be considered, and hence fewer than the total number of Bloom filters can be searched against the log message.

The following show two examples of log messages that may be generated by a normally operating computing system:
2018-09-21T03:53:46.945905+00:00 7035 wsgi starting up on http://1.1.1.1:7777
2018-09-21T03:53:46.945905+00:00 7035 wsgi starting up on http://2.2.2.2:8888

In a particular example of this disclosure, the first part, which includes a date and time timestamp, is ignored or removed from the log message before being included as a predefined message and/or being used to determine if it relates to anomalous behaviour.

The second part "7035" being a numeric part may also be ignored or removed. Finally, the IP addresses (in the form of web or HTTP addresses) in the final part are also considered as variable and ignored or removed. The remaining portion of both of these example log messages, "wsgi starting up on", is the same for both log messages and is considered as a constant part of the log messages. These two log messages may thus for example be included as a single predefined log message and hence may be associated with one Bloom filter. If in some examples white spaces are removed, the string "wsgistartingupon" may be the predefined log message. In some examples, the predefined log message may have four words (before white space removal) and therefore may be potentially matched only to log messages generated by the computing system being monitored that also have four words (after variable portions are removed or ignored). In some examples, how log messages during normal non-anomalous operation are converted into the predefined log messages, and how a log message during monitoring of the computing system is converted into the portion of the log message that is compared to the predefined log messages (e.g. though Bloom filter matching), can be configurable.

In some examples, determining whether the at least a portion of the log message matches any of the one or more associated predefined log messages comprises determining that the at least a portion of the log message matches none of the one or more associated predefined log messages, and determining that the at least a portion of the log message is associated with an anomalous event of the computing system. For example, none of the Bloom filters returns a possibly positive match with one of the predefined log messages, the log message (possibly with variable portions removed as indicated above) may be a message not in the database, and thus for example a message not encountered during normal operation of the computing system (or other, similar computing system). Thus, the method 100 may be referred to as an anomaly detection stage. Alternatively, the log message (or portion thereof) may match one or more Bloom filters, but none of the database entries of predefined log messages corresponding to the matching Bloom filters match the log message (or portion thereof). As a result, the method 100 may determine that the log message is associated with anomalous operation or an anomalous event. Additionally or alternatively, for example, determining whether the at least a portion of the log message matches any of the one or more associated predefined log messages comprises determining that the at least a portion of the log message matches at least one of the one or more associated predefined log messages, and determining that the at least a portion of the log message is associated with normal operation of the computing system.

Some examples of this disclosure may provide a huge improvement in time complexity with minimal increase in space complexity compared to a system that performs an exhaustive search of a database for every log message encountered. Furthermore, some examples of this disclosure may not use an expensive or complex backend database. In some examples, false flagging of anomalies (false positives) may be low due to the "backup" lookup of the database using the key associated with matching Bloom filter(s). However, false negatives may also be low and may also be avoided entirely.

Particular example embodiments will now be described. In a first stage of embodiments of this disclosure, referred to as a learn stage, the complete set of log messages of a working system (i.e. a computing system that is operating normally and without anomalies) is parsed and log messages similar or identical constant component (i.e. the remaining portion when variable and/or white space parts are removed) are clustered into groups to identify the logical templates for that group of log messages. The logical template may comprise for example a predefined log message. The grouping is maintained in a hierarchical data structure with one bucket per length of the log message, where length is measured in terms of the word count in the log message (in some examples with variable portions removed). Each bucket can consist of multiple groups - that is, multiple different predefined log messages can have the same number of words - and each group consists of a unique logical template.

The logical template strings (predefined messages) can be stored in any suitable manner. For example, any suitable database or data structure can be used. In some examples, a unique key will be generated (e.g. UUID) and each predefined massage may be stored as key value pair, where the key is the generated key, and the value is the logical template string or predefined message. Alternatively, for example, the original log file(s) generated by the computing system during the first stage can be used as a "database", and the key may therefore be for example a line number, log number or an index into the log file(s).

A Bloom filter and key can be stored in some examples for each logical template. In some examples, these can be stored in fast access storage or memory such as random access memory (RAM).

In one particular example, the following four log messages are generated in a working, non-anomalous system:
sever shutdown successfully
initializing cgroups cpuset
wsgi starting up on 10.10.10.10
wsgi starting up on 10.10.10.30

The first two logs result in two logical templates with word count 3, and the last two are merged to a single template of length 4 (after removal of variable portions). Figure 2 shows an example of a data structure 200 that may be created based on these four log messages. The data structure 200 comprises a length 3 bucket 202 and a length 4 bucket 204. The length 3 bucket is associated with two Bloom filter and key pairs 206 and 208. Each pair includes an 8-bit Bloom filter value and an 8-figure key value, which points to the corresponding predefined log message in a database or log file. The length 4 bucket 204 is associated with a Bloom filter and key pair 210. It can be seen that there are a maximum of four '1' bits in each Bloom filter value, and so the Bloom filters may be associated with at least four hash functions to provide indexes of the '1' bits. However, in other examples, there may be any number of bits in each Bloom filter and any number of hash functions. Additionally or alternatively, '1' bits may be replaced with '0' bits and vice versa. The data structure may also be created based on any number of log messages having any number of words (e.g. after variable portion removal).

In some examples, the maximum word count of "normal" log messages (e.g. predefined log messages) is not expected to be large, e.g. less than 100. Therefore, 1. Bucket: The word count in log messages are not many (<<100). Hence, for example, the buckets can be stored in an array indexed by the word count. The Bloom filter and key pairs can be stored in some examples as a linked list.

In an example of a second stage, referred to as anomaly detection during run time, this may take place in a deployed system. As a log message is generated by the deployed computing system, these are matched against the Bloom filters such as for example those shown in Figure 2. In some examples, variable components in the log messages are ignored or removed prior to matching with the Bloom filters. The number of words in the log message (or the remaining portion if any portions are removed) is mapped to a bucket. If no buckets exist with the correct number of words, the log message does not match any of the predefined messages. This may then be considered as an anomaly, e.g. associated with anomalous behavior of the computing system or an anomalous event.

If the number of words matches a bucket, then the (remaining) log message (or more specifically, the value resulting from providing the log message to all of the hash functions) is matched against all Bloom Filters within the bucket. Hash functions are each applied to the log message only once, and the resultant value or Bloom bit map can be matched against all of the Bloom filters. If the (remaining) log message matches one or more Bloom filters, there is a chance that this may be a false positive, as multiple different log messages may map to the same Bloom bitmap value. Therefore, the log message must be checked against the predefined message stored in the database for each matching Bloom filter. The associated key(s) can be used to perform database lookup. If on the other hand the log message does not match any Bloom filters, the log message does not match any predefined log message. Therefore, this can be treated as an anomalous message as a result of anomalous behavior of the computing system or an anomalous event. No checking for a match of the log message in the database is required.

In some examples, regarding checking if the log message matches a predefined message in the database, as a result of the log message matching a Bloom filter, the key associated with the matching Bloom filter can be used to perform a fast search or lookup of the database. In some examples, the database may comprise a log file containing log messages, and the key may comprise a line number or offset. If the log message matches the predefined message found using the key, the log message is not an anomaly and is treated as normal. On the other hand, if the log message does not match the predefined message, this may be treated as anomalous.

Although examples disclosed herein use multiple Bloom Filters, the size of each Bloom filter can be small, for example just 8 bits. This is because the Bloom Filter represents just a single string (e.g. a predefined log message or logical template). Therefore, for example, if there are 1 million different logical templates (predefined log messages), the storage requirement for the Bloom filter and key pairs may in some examples use the following storage capacity, where each Bloom filter comprises 8 bits, each associated key comprises 16 bytes, and the Bloom filter and key pairs are stored as a linked list with 8 byte pointers to the next item in the list: 1 MB (for Bloom filters, 8 bits each) + 16 * 1 MB (for 16 byte keys) + 8 * 1 MB (linked list pointers) + 800 bytes for 100 indices. This is around 25 MB, which can be easily accommodated in RAM or other fast storage.

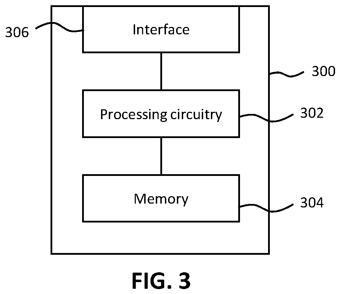

Figure 3 is a schematic of an example of apparatus 300 for anomaly detection from log messages. The apparatus 300 comprises processing circuitry 302 (e.g. one or more processors) and a memory 304 in communication with the processing circuitry 302. The memory 304 contains instructions executable by the processing circuitry 302. The apparatus 300 also comprises an interface 306 in communication with the processing circuitry 302. Although the interface 306, processing circuitry 302 and memory 304 are shown connected in series, these may alternatively be interconnected in any other way, for example via a bus.

In one embodiment, the memory 304 contains instructions executable by the processing circuitry 302 such that the apparatus 300 is operable to determine whether at least a portion of a log message generated by a computing system matches one or more of a plurality of Bloom filters, wherein each Bloom filter is associated with one or more respective predefined log messages and one or more respective database keys, and each database key is associated with one of the predefined log messages in a database, and if the at least the portion of the log message matches the one or more Bloom filters, for each of the one or more Bloom filters, determine whether the at least a portion of the log message matches any of the one or more associated predefined log messages by performing a lookup of the database using the associated one or more database keys. In some examples, the apparatus 300 is operable to carry out the method 100 described above with reference to Figure 1.

It should be noted that the above-mentioned examples illustrate rather than limit the invention, and that those skilled in the art will be able to design many alternative examples without departing from the scope of the appended statements. The word "comprising" does not exclude the presence of elements or steps other than those listed in a claim, "a" or "an" does not exclude a plurality, and a single processor or other unit may fulfil the functions of several units recited in the statements below. Where the terms, "first", "second" etc. are used they are to be understood merely as labels for the convenient identification of a particular feature. In particular, they are not to be interpreted as describing the first or the second feature of a plurality of such features (i.e. the first or second of such features to occur in time or space) unless explicitly stated otherwise. Steps in the methods disclosed herein may be carried out in any order unless expressly otherwise stated. Any reference signs in the statements shall not be construed so as to limit their scope.

## Claims

1. A computer implemented method (100) of anomaly detection from log messages, the method comprising:
determining (102) whether at least a portion of a log message generated by a computing system matches one or more of a plurality of Bloom filters, wherein each Bloom filter is associated with one or more respective predefined log messages and one or more respective database keys, and each database key is associated with one of the predefined log messages in a database; and
if the at least the portion of the log message matches the one or more Bloom filters, for each of the one or more Bloom filters, determining (104) whether the at least a portion of the log message matches any of the one or more associated predefined log messages by performing a lookup of the database using the associated one or more database keys, wherein the at least a portion of the log message comprises the log message with variable portions removed.

2. The method (100) of claim 1, wherein each Bloom filter is associated with only one respective predefined log message and only one respective database key associated with the predefined log message in the database.

3. The method (100) of any of claims 1 to 2, wherein the one or more Bloom filters are associated with log messages with a first number of words, and determining whether the at least a portion of a log message matches the one or more Bloom filters comprises determining that the at least a portion of the log message has the first number of words.

4. The method (100) of any of claims 1 to 3, wherein each database key comprises an index in the database for the associated predefine log message.

5. The method (100) of any of claims 1 to 4, wherein each predefined log message comprises a log message from the computing system operating normally and/or another computing system operating normally.

6. The method (100) of any of claims 1 to 5, wherein determining whether the at least a portion of the log message matches any of the one or more associated predefined log messages comprises determining that the at least a portion of the log message matches none of the one or more associated predefined log messages, and determining that the at least a portion of the log message is associated with an anomalous event of the computing system.

7. The method (100) of any of claims 1 to 5, wherein determining whether the at least a portion of the log message matches any of the one or more associated predefined log messages comprises determining that the at least a portion of the log message matches at least one of the one or more associated predefined log messages, and determining that the at least a portion of the log message is associated with normal operation of the computing system.

8. The method (100) of any of claims 1 to 7, wherein the method comprises, if the at least the portion of the log message matches none of the Bloom filters, determining that the at least a portion of the log message is associated with an anomalous event of the computing system.

9. The method (100) of any of claims 1 to 8, wherein the computing system comprises a Network Function, NF, or Virtualized Network Function, VNF.

10. A computer program comprising instructions which, when executed on at least one processor, cause the at least one processor to carry out a method according to any one of the preceding claims.

11. A subcarrier containing a computer program according to claim 10, wherein the subcarrier comprises one of an electronic signal, optical signal, radio signal or computer readable storage medium.

12. Apparatus (300) for anomaly detection from log messages, the apparatus (300) configured to:
determine whether at least a portion of a log message generated by a computing system matches one or more of a plurality of Bloom filters, wherein each Bloom filter is associated with one or more respective predefined log messages and one or more respective database keys, and each database key is associated with one of the predefined log messages in a database; and
if the at least the portion of the log message matches the one or more Bloom filters, for each of the one or more Bloom filters, determine whether the at least a portion of the log message matches any of the one or more associated predefined log messages by performing a lookup of the database using the associated one or more database keys,
wherein the at least a portion of the log message comprises the log message with variable portions removed.

13. The apparatus (300) of claim 12, further configured to carry out the method according to any one of claims 2-9.

## Patentansprüche

1. Rechnerumgesetztes Verfahren (100) zur Anomaliedetektion aus Protokollnachrichten, wobei das Verfahren Folgendes umfasst:
Bestimmen (102), ob eine Protokollnachricht, die durch ein Rechensystem erzeugt wird, mindestens abschnittsweise mit einem oder mehreren einer Vielzahl von Bloom-Filtern übereinstimmt, wobei jeder Bloom-Filter einer oder mehreren jeweiligen vordefinierten Protokollnachrichten und einem oder mehreren jeweiligen Datenbankschlüsseln zugeordnet ist und jeder Datenbankschlüssel einer der vordefinierten Protokollnachrichten in einer Datenbank zugeordnet ist; und
wenn die Protokollnachricht mindestens abschnittsweise mit dem einen oder den mehreren Bloom-Filtern übereinstimmt, für jeden des einen oder der mehreren Bloom-Filter Bestimmen (104), ob die Protokollnachricht mindestens abschnittsweise mit einem der einen oder der mehreren zugeordneten vordefinierten Protokollnachrichten übereinstimmt, durch Durchführen eines Nachschlagens der Datenbank unter Verwendung des zugeordneten einen oder der zugeordneten mehreren Datenbankschlüssel,
wobei die Protokollnachricht mindestens abschnittsweise die Protokollnachricht mit entfernten variablen Abschnitten umfasst.

2. Verfahren (100) nach Anspruch 1, wobei jeder Bloom-Filter nur einer jeweiligen vordefinierten Protokollnachricht und nur einem jeweiligen Datenbankschlüssel zugeordnet ist, welcher der vordefinierten Protokollnachricht in der Datenbank zugeordnet ist.

3. Verfahren (100) nach einem der Ansprüche 1 bis 2, wobei der eine oder die mehreren Bloom-Filter Protokollnachrichten mit einer ersten Anzahl von Wörtern zugeordnet sind und das Bestimmen, ob eine Protokollnachricht mindestens abschnittsweise mit dem einen oder den mehreren Bloom-Filtern übereinstimmt, Bestimmen, dass die Protokollnachricht mindestens abschnittsweise die erste Anzahl von Wörtern aufweist, umfasst.

4. Verfahren (100) nach einem der Ansprüche 1 bis 3, wobei jeder Datenbankschlüssel einen Index in der Datenbank für die zugeordnete vordefinierte Protokollnachricht umfasst.

5. Verfahren (100) nach einem der Ansprüche 1 bis 4, wobei jede vordefinierte Protokollnachricht eine Protokollnachricht von dem normal funktionierenden Rechensystem und/oder einem anderen normal funktionierenden Rechensystem umfasst.

6. Verfahren (100) nach einem der Ansprüche 1 bis 5, wobei das Bestimmen, ob die Protokollnachricht mindestens abschnittsweise mit einer der einen oder der mehreren zugeordneten vordefinierten Protokollnachrichten übereinstimmt, Bestimmen, dass die Protokollnachricht mit keiner der einen oder der mehreren zugeordneten vordefinierten Protokollnachrichten mindestens abschnittsweise übereinstimmt, und Bestimmen, dass die Protokollnachricht mindestens abschnittsweise einem abnormalen Ereignis des Rechensystems zugeordnet ist, umfasst.

7. Verfahren (100) nach einem der Ansprüche 1 bis 5, wobei das Bestimmen, ob die Protokollnachricht mindestens abschnittsweise mit einer der einen oder der mehreren zugeordneten vordefinierten Protokollnachrichten übereinstimmt, Bestimmen, dass die Protokollnachricht mindestens abschnittsweise mit mindestens einer der einen oder der mehreren zugeordneten vordefinierten Protokollnachrichten übereinstimmt, und Bestimmen, dass die Protokollnachricht mindestens abschnittsweise dem normalen Funktionieren des Rechensystems zugeordnet ist, umfasst.

8. Verfahren (100) nach einem der Ansprüche 1 bis 7, wobei das Verfahren, wenn die Protokollnachricht mit keinem der Bloom-Filter mindestens abschnittsweise übereinstimmt, Bestimmen, dass die Protokollnachricht mindestens abschnittsweise einem abnormalen Ereignis des Rechensystems zugeordnet ist, umfasst.

9. Verfahren (100) nach einem der Ansprüche 1 bis 8, wobei das Rechensystem eine Netzfunktion, NF, oder eine virtualisierte Netzfunktion, VNF, umfasst.

10. Rechnerprogramm, umfassend Anweisungen, die, wenn sie auf mindestens einem Prozessor ausgeführt werden, den mindestens einen Prozessor dazu veranlassen, ein Verfahren nach einem der vorhergehenden Ansprüche durchzuführen.

11. Unterträger, umfassend ein Rechnerprogramm nach Anspruch 10, wobei der Unterträger eines von einem elektronischen Signal, einem optischen Signal, einem Funksignal oder einem rechnerlesbaren Speichermedium umfasst.

12. Vorrichtung (300) zur Anomaliedetektion aus Protokollnachrichten, wobei die Vorrichtung (300) zu Folgendem konfiguriert ist:
Bestimmen, ob eine Protokollnachricht, die durch ein Rechensystem erzeugt wird, mindestens abschnittsweise mit einem oder mehreren einer Vielzahl von Bloom-Filtern übereinstimmt, wobei jeder Bloom-Filter einer oder mehreren jeweiligen vordefinierten Protokollnachrichten und einem oder mehreren jeweiligen Datenbankschlüsseln zugeordnet ist und jeder Datenbankschlüssel einer der vordefinierten Protokollnachrichten in einer Datenbank zugeordnet ist; und
wenn die Protokollnachricht mindestens abschnittsweise mit dem einen oder den mehreren Bloom-Filtern übereinstimmt, für jeden des einen oder der mehreren Bloom-Filter Bestimmen, ob die Protokollnachricht mindestens abschnittsweise mit einer der einen oder der mehreren zugeordneten vordefinierten Protokollnachrichten übereinstimmt, durch Durchführen eines Nachschlagens der Datenbank unter Verwendung des zugeordneten einen oder der zugeordneten mehreren Datenbankschlüssel,
wobei die Protokollnachricht mindestens abschnittsweise die Protokollnachricht mit entfernten variablen Abschnitten umfasst.

13. Vorrichtung (300) nach Anspruch 12, die ferner dazu konfiguriert ist, das Verfahren nach einem der Ansprüche 2-9 durchzuführen.

## Revendications

1. Procédé (100) mis en œuvre par ordinateur de détection d'anomalie à partir de messages de journal, le procédé comprenant :
la détermination (102) si au moins une partie d'un message de journal généré par un système informatique correspond à un ou plusieurs filtres Bloom d'une pluralité de filtres Bloom, chaque filtre Bloom étant associé à un ou plusieurs messages de journal prédéfinis respectifs et à une ou plusieurs clés de base de données respectives, et chaque clé de base de données étant associée à l'un des messages de journal prédéfinis dans une base de données ; et
si l'au moins une partie du message de journal correspond à l'un ou plusieurs filtres Bloom, pour chacun des filtres Bloom, la détermination (104) si au moins une partie du message de journal correspond à l'un quelconque des messages de journal prédéfinis associés en effectuant une recherche
dans la base de données à l'aide de l'une ou plusieurs clés de base de données associées, l'au moins une partie du message de journal comprenant le message de journal avec des parties variables supprimées.

2. Procédé (100) selon la revendication 1, dans lequel chaque filtre Bloom est associé à un seul message de journal prédéfini respectif et à une seule clé de base de données respective associée au message de journal prédéfini dans la base de données.

3. Procédé (100) selon l'une quelconque des revendications 1 à 2, dans lequel l'un ou plusieurs filtres Bloom sont associés à des messages de journal avec un premier nombre de mots, et la détermination de la correspondance entre l'une ou plusieurs parties d'un message de journal et l'un ou plusieurs filtres Bloom comprend la détermination que l'une ou plusieurs parties du message de journal ont le premier nombre de mots.

4. Procédé (100) selon l'une quelconque des revendications 1 à 3, dans lequel chaque clé de base de données comprend un index dans la base de données pour le message de journal prédéfini associé.

5. Procédé (100) selon l'une quelconque des revendications 1 à 4, dans lequel chaque message de journal prédéfini comprend un message de journal provenant du système informatique fonctionnant normalement et/ou d'un autre système informatique fonctionnant normalement.

6. Procédé (100) selon l'une quelconque des revendications 1 à 5, dans lequel la détermination que l'une ou plusieurs parties du message de journal correspondent à l'un quelconque de l'un ou plusieurs messages de journal prédéfinis associés comprend la détermination que l'une ou plusieurs parties du message de journal ne correspondent à aucun de l'un ou plusieurs messages de journal prédéfinis associés, et la détermination que l'une ou plusieurs parties du message de journal sont associées à un événement anormal du système informatique.

7. Procédé (100) selon l'une quelconque des revendications 1 à 5, dans lequel la détermination que l'une ou plusieurs parties du message de journal correspondent à l'un quelconque de l'un ou plusieurs messages de journal prédéfinis associés comprend la détermination que l'une ou plusieurs parties du message de journal correspondent à au moins l'un de l'un ou plusieurs messages de journal prédéfinis associés, et la détermination que l'une ou plusieurs parties du message de journal sont associées au fonctionnement normal du système informatique.

8. Procédé (100) selon l'une quelconque des revendications 1 à 7, dans lequel le procédé comprend, si l'une ou plusieurs parties du message de journal ne correspondent à aucun des filtres Bloom, la détermination que l'une ou plusieurs parties du message de journal sont associées à un événement anormal du système informatique.

9. Procédé (100) selon l'une quelconque des revendications 1 à 8, dans lequel le système informatique comprend une fonction réseau, NF, ou une fonction réseau virtualisée, VNF.

10. Programme informatique comprenant des instructions qui, lorsqu'elles sont exécutées sur au moins un processeur, amènent l'un ou plusieurs processeurs à exécuter un procédé selon l'une quelconque des revendications précédentes.

11. Sous-porteuse contenant un programme informatique selon la revendication 10, dans lequel la sous-porteuse comprend un signal électronique, un signal optique, un signal radio ou un support de stockage lisible par ordinateur.

12. Appareil (300) de détection d'anomalie à partir de messages de journal, l'appareil (300) étant configuré pour :
déterminer si au moins une partie d'un message de journal généré par un système informatique correspond à un ou plusieurs filtres Bloom d'une pluralité de filtres Bloom, chaque filtre Bloom étant associé à un ou plusieurs messages de journal prédéfinis respectifs et à une ou plusieurs clés de base de données respectives, et chaque clé de base de données étant associée à l'un des messages de journal prédéfinis dans une base de données ; et
si l'au moins une partie du message de journal correspond à l'un ou plusieurs filtres Bloom, pour chacun desdits filtres Bloom, déterminer si au moins une partie du message de journal correspond à l'un quelconque desdits messages de journal prédéfinis associés en effectuant une recherche dans la base de données à l'aide de l'une ou plusieurs clés de base de données associées,
dans lequel l'au moins une partie du message de journal comprend le message de journal avec des parties variables supprimées.

13. Appareil (300) selon la revendication 12, configuré en outre pour mettre en œuvre le procédé selon l'une quelconque des revendications 2 à 9.
